# EUROPEAN PATENT APPLICATION

(11) **EP 2 498 031 A1**
(43) Date of publication of application: **12.09.2012**
(21) Application number: 11157374.7
(22) Date of filing: 08.03.2011
(51) Int. Cl.: F25D 23/04, F25D 25/04

(54) **Refrigerating appliance**

(71) Applicant: Electrolux Home Products Corporation N.V., 1130 Brussel (BE)
(72) Inventor: Baldo, Federico, 33080, Porcia (PN) (IT)
(74) Representative: Markovina, Paolo

(57) **Abstract**

A refrigerating appliance is described, which includes a door (1) defining an inner surface (2) on which a plurality of lugs (3) disposed one on top of the other along a vertical axis (Y) are located and a height-adjustable storage shelf (4) mounted on the door (1). The storage shelf comprises coupling means (5) to couple the shelf (4) to one lug (3) of said plurality, the coupling means (5) being movable from a first to a second position, in said first position the coupling means can be coupled to said lug for securing the position of the shelf on the door, and in the second position the coupling means are disengaged from said lug to allow the adjusting of the height of the shelf. The storage shelf (4) also includes a guiding portion (6) sized to embrace at least a portion of a lug (3) of the plurality and guide the shelf (4) in its vertical movements.

## Description

The present invention relates to a refrigerating appliance, such as a refrigerator or a freezer, including an adjustable height support assembly coupled to its door.

It is known to realize refrigerators including a door on which shelves for the storage of items are fixed. These shelves are so designed to be hooked onto supports at various levels, e.g. at different heights, on the inside of the door, in order to adapt to the different sizes of the items which can be located inside the shelves. To change the vertical position of a shelf in the door, it is generally necessary to disengage the hooks of the shelf from the supports of the door and then remove completely the shelf from the supports, and then to engage the hooks in the new supports located at the different selected height. A typical example of such a configuration is disclosed for example in GB 1535805 in the name of Electrolux Limited.

These shelves above described which have to be removed completely form the door of the refrigerator when the user wants to adjust the shelf's height require that all the items stored in the same have to be removed before changing the position of the shelf, in order to avoid unintentional fall of objects. This operation is considered rather inconvenient by the users and different solutions to overcome this problem have been proposed.

WO 2008/077742 in the name of BSH BOSCH SIEMENS HAUSGERAETE relates to a refrigerator comprising a refrigerator door, on which at least one height-adjustable door shelf is provided, detachably fixed to the inner side of the door by means of a catch device for height adjustment, characterized in that the door shelf has a first usable catch which forms the catch device together with a second catch. Said refrigerator has the advantage that, for height adjustment, a mechanism of little complexity and low cost is used.

US 3682521 in the name of General Motors Corporation describes an adjustable shelf having vertical end walls with depressible tabs secured to the outer surfaces thereof, the depressible tabs in turn having retaining lugs mounted thereon. A plurality of mounting lugs are secured to cooperating fixed vertical surfaces adjacent to which the shelf is to be mounted whereby the retaining lugs engage the mounting lugs to retain the shelf in a particular position. The tabs can be molded integral with the shelf so as to be inherently biased outwardly into normal engagement with the mounting lugs. In one embodiment the retaining lugs comprise a cam surface allowing the shelf to be vertically adjusted upwardly without depressing the tabs. In all embodiments, however, it is necessary to depress the tabs to withdraw the shelf from the fixed supporting structure having the mounting lugs secured thereto.

US 2003/011291 in the name of Comercial Acros Whirlpool, S.A. discloses a storage bin mounting system for a refrigerator door in which the refrigerator door has an inner liner formed by supporting side walls, which extend forwardly of a back wall defining a cavity. At least a vertically extending rib is formed integrally in each side wall and a plurality of retention elements are selectively aligned in different locations in back wall. A storage bin includes an extending vertically slot between opposite side walls, as well as, resilient coupling means connected in a rear wall of said storage bin. The storage bin is mounted within the cavity of the refrigerator door, assembling the vertically slot of the inner liner with each vertically extending rib, as well as, the plurality of retention elements with the resilient coupling means of the storage bin. The height of the storage bin is adjusted within the cavity with an upwardly or downwardly slidable movement, engaging and disengaging the resilient coupling means and the retention means.

US 7748805 in the name of Whirlpool Corporation is relative to a support element for use with a refrigerator, the support element having a support surface with a rear edge, at least two support arms located on the support element and being laterally spaced from one another, with the support arms extending rearwardly of the rear edge and being laterally biased.

The present invention relates to a refrigerating appliance including a door and a height adjustable support assembly which comprises a storage member, such as a shelf, connected thereto.

For the purposes of the present invention, with "storage member" it is intended either a shelf or another member, like a bin, suitable to support food items or other sort of items typically stored in a refrigerator or freezer and attached to the door of the same.

In order to modify the storage member positioning along the vertical axis of the door, the member does not have to be decoupled from the door. In other words, in the refrigerator according to the invention, the storage member substantially slides on the inner surface of the door in a guided manner till the new desired positioning of the storage member along the vertical direction has been reached.

An additional goal of the invention is to obtain a refrigerating appliance which does not require extensive modification of the door structure when compared to the common door structures present on the market in order to include such a height adjustable storage member having a "simple adjustment" along the vertical direction.

As mentioned in the description of the prior art, generally refrigerator doors comprise a plurality of support elements, in particular protruding lugs, located in the inner surface of the door itself, to which shelves are attached. The term "inner surface" has to be understood as the surface of the door that is not visible when the refrigerator is closed. The lugs are generally aligned one on top of the other along a vertical axis, at least for a portion of the height of the door, forming substantially at least a vertical column, often two vertical parallel columns, and the shelves are fixed in a removable manner to the lugs via fastening means. As mentioned, these shelves are typically removable in a rather complex way.

Applicant has considered a refrigerating appliance having a door which includes in its inner surface a lugs structure similar to the one just described, and a sliding height adjustable storage member as the one previously mentioned coupled to such lugs structure. In this way, the refrigerating appliance of the invention overcomes the problems of the prior art without modifying substantially the supporting structure (formed by the plurality of lug members) present in the door.

More in particular, the refrigerator of the invention comprises a support assembly including the mentioned storage member and coupling means to couple the storage member to one or more lugs of said plurality, said coupling means being movable from a first position wherein said coupling means are coupled to said lug(s) for securing the position of the storage member on the door, to a second position wherein said coupling means are disengaged from said lug(s) to allow the adjusting of the height of the storage member. The support assembly also includes a guiding portion sized to embrace at least a portion of a lug of the plurality and guide the storage member in its movements along the vertical axis.

Indeed, in the refrigerating appliance of the invention, one (or more) storage member(s) is (are) coupled to the door via coupling means which are movable from a "coupled" position in which the storage member can be fixed to the lugs to a "decoupled position" in which there is no more engagement between the coupling means and the lugs. In this disengaged position, thanks to guiding portions coupled to the storage member, the latter can slide, i.e. it can be either raised or lowered, along the inner surface of the door. In this sliding movement, the presence of the guiding portion avoids any overturn or tilt of the storage member itself.

Preferably, the guiding portion is located in correspondence to a longitudinal end of the storage member, even more preferably in correspondence of both ends.

In a preferred embodiment of the invention, the refrigerating appliance includes two vertical columns of lugs, which have the function of "broken" ribs acting as rails for the guiding portions with which they have a form-fitting coupling in order for the storage member to be slidable with an upwardly or downwardly movement.

The substantial absence of changes in the construction of the door of the refrigerating appliance with respect to prior art doors allows to leave the standard steps for the fabrication of the refrigerator unmodified. Standardization therefore can be realized, as the same fabrication process can be used to realize refrigerator according to the prior art including fixed shelves and for refrigerators according to the present invention, in this way minimizing the production costs, limiting the differences to the shelves manufacturing steps.

In addition, users already owning a refrigerator according to the prior art, can add to the same height adjustable storage members realized according to the present invention, thus obtaining a refrigerator including both fixed and movable shelves.

Moreover, the choice of which type of shelves to mount on a refrigerating appliance can be postponed to the very late stage, e.g. left to the user at the moment of purchase, due to the fact that on the same refrigerator both fixed and slidable shelves can be mounted; the user is even allowed to change the shelves from one type to the other if his/her needs are also changed.

The present invention thus relates to a refrigerating appliance including a door defining an inner surface on which at least a plurality of support members disposed one on top of the other along a vertical axis are located, and a height-adjustable support assembly mounted on said door and comprising coupling means for coupling with at least one of said support members; the coupling means are movable from a first position, where they can be coupled to said at least one support member for securing the position of the support assembly on the door, to a second position, where they are disengaged from said at least one support member to allow adjusting the height of the support assembly; the support assembly also includes a guiding portion configured to be slidely coupled with the support members to guide the support assembly in its vertical movement.

Preferably, the coupling means comprise a hook member which, in said first position, is in abutment with a surface of said at least one support member.

More in detail, in said first position the hook member is in abutment with an upper surface of said at least one support member and hinders the sliding of the support assembly.

The coupling means may comprise a resilient element connected to the hook member to bias the hook member towards said first position.

In a different embodiment, the coupling means may comprise a hinge connected to the hook member to rotate the hook member from and to said first position.

The coupling means may also include an actuating portion, which is connected to the hook member and is manually operable by a user to move the hook member from said first to said second position.

In a possible embodiment, the coupling means and the guiding portion are integral with each other.

The guiding portion may be realized in a plastic material having a low friction coefficient.

The inner surface of the door may include a first and a second plurality of support members respectively aligned along the vertical axis, the support assembly including first and second coupling means, each coupling means in said first position being connected to a support member of said first or of said second plurality.

The support assembly may include a connecting element that connects the first and the second coupling means with each other so that a movement of any of said first or second coupling means from said first to said second position, or vice versa, causes the movement of the other of said first or second coupling means from said first to said second position, or vice versa.

The support assembly may include a casing having first and second side walls, said first and second coupling means being located in correspondence to said first and second side walls.

The support assembly may include first and second guiding portions, the first guiding portion being located in correspondence of said first side wall of said support assembly and embracing at least a portion of a support member of said first plurality and said second guiding portion being located in correspondence of said second side wall of said support assembly and embracing at least a portion of a support member of said second plurality, so that said support assembly can slide on said door, said first and second plurality of support members acting as rails.

The support members are preferably defined by lugs.

The invention will be better described below in a non limiting example on the basis of the appended drawings. The figures show:
- figure 1 is a perspective view of a refrigerator including a door to which a height-adjustable support assembly according to the invention is connected;
- fig 1a is a perspective view of the refrigerator door of fig. 1 including the height-adjustable support assembly; ;
- fig. 2a is a perspective view of the support assembly attached to the door of figures 1 and 1a;
- fig. 2b is a perspective view of the support assembly of fig. 2a in a disassembled condition;
- fig. 3 is a perspective view showing in an enlarged scale a detail of the support assembly of figs. 2a or 2b disassembled from the remaining parts;
- figs. 4a, 4b and 4c are three different partial perspective views of a detail, of three different embodiments of the support assembly of fig. 2a in an assembled, partially disassembled and disassembled configuration, respectively;
- figs. 5a and 5b are schematic cross-sections of the door of fig. 1a in which the support assembly is in a first operative position and in a second operative position, respectively;
- figs. 6a - 6d are four perspective views of a detail of the door of fig. 1a in which the support assembly is moved upwardly;
- figs. 7a - 7d are four perspective views of a detail of the door of fig. 1a in which the support assembly is moved downwardly;
- figs. 8a and 8b are two partial perspective views of an additional embodiment of the same details depicted in fig. 3 in the first and in the second operative position, respectively;
- figs. 9a and 9b are two perspective views of an additional embodiment of the storage member of figs. 2a and 2b.

In the figures, elements that are identical or that fulfill the same function bear the same reference numeral. In addition, the figures are in some cases oversimplified and elements are removed in order to enhance clarity of the same to better show and describe the present invention.

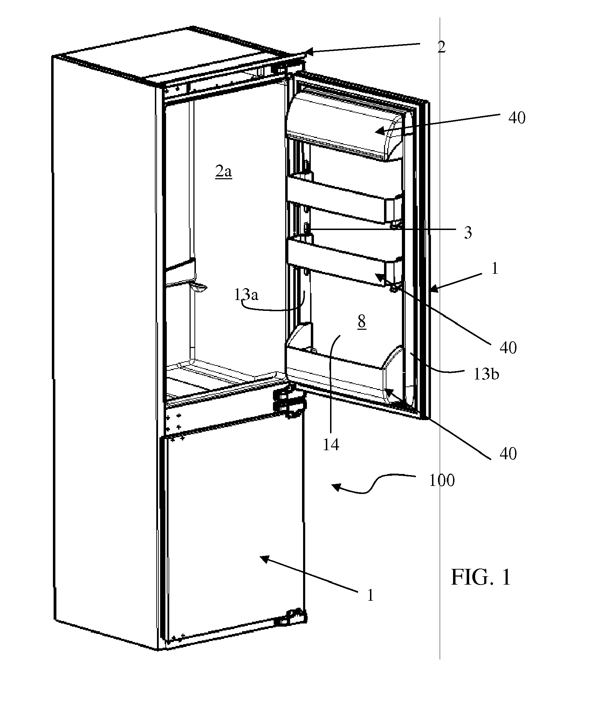

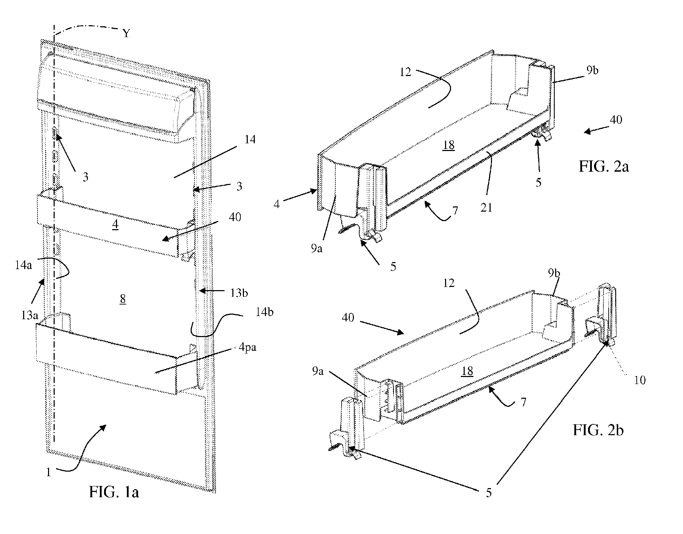

With initial reference to fig. 1, a refrigerating appliance 100 according to the invention includes a body 2, in which a refrigerating compartment 2a is defined, and a door 1 that can be opened or closed to access or close the refrigerating compartment 2a in a conventional manner. For example, the door 1 can be pivotally mounted to the refrigerator body 2 via hinges (not shown).

In addition, refrigerating appliance 100 includes at least a support assembly 40, fixed on the side of the door 1 facing the compartment 2a, the position of which can be adjusted along the vertical direction.

In all the figures, with the exception of the door 1, elements and/or details of the refrigerating appliance 100 are not shown and are considered to be known in the art.

It has to be understood that the refrigerating appliance 100 might include more than a refrigerating compartment 2a and thus more than one door 1, as in the example of fig. 1 where two doors are present, the additional doors being similar or different to the one hereby described.

With now reference to figure 1a, the door 1 includes an inner surface 8 which is facing the refrigerating compartment 2a when the door 1 is closed. The door 1 on its inner surface 8 defines two substantially parallel first and second side walls 13a,13b which are inwardly projecting with respect to the refrigerating compartment 2a from a substantially flat rear wall 14, to define a cavity in the door 1.

The first and second side walls 13a,13b more in detail include a first surface 14a and a second surface 14b, respectively, which are facing each other and in each of which a plurality of support members 3 is realized.

Preferably, said support members 3 are integrally molded with the first and/or second side wall 13a,13b of the door 1. Even more preferably, the door 1 includes an inner liner which is molded in a single piece that includes the two side walls, rear wall and support members. The molding process can be for example a thermoforming process. Alternatively, the support members can be produced separately, for example by extrusion, and then fixed on the side walls 13a,13b.

The support members 3 can be lugs, pin members or other elements suitable to support shelves or other support assemblies like the one described in the following.

In the rest of the present description, reference will be made only to lugs, but it is clear that any other element suitable for the same application can be used as well.

In a further embodiments, the lugs 3 can be present not only on the first and second surface 14a,14b of the first and second side wall 13a,13b, respectively, but also in additional portions of the inner surface 8; or a configuration in which the lugs 3 are located for example substantially in the central portion of the rear wall 14 of door 1 can also be envisaged.

In a preferred configuration, the lugs 3 are arranged one on top of the other forming two vertical columns, one in the first surface 14a of the first side wall 13a and the other in the second surface 14b of the second side wall 13b. In other words, the lugs 3 form two parallel columns along respective vertical Y axes parallel to the longitudinal axis of the refrigerating appliance 100. In an even more preferred embodiment, the lugs 3 are disposed in pair at the same height, i.e. each lug 3 located on the first surface 14a of the first side wall 13a has a corresponding lug 3 located on the second surface 14b of the second side wall 13b and the two lugs are positioned at the same height, i.e. at the same "ordinate" of the Y axis with respect to a fixed reference level. The couple of lugs one on the first side wall 13a and its corresponding lug on the second side wall 13b having the same height is called in the following "lugs pair".

The spacing along the Y axis between two different lugs 3 belonging to the same column may be the same for all lugs or it may vary, i.e. the vertical distance between two lugs belonging to the same column may be variable depending on the chosen lugs and the value of the spacing itself may depend, among other, on the size of the door, on the type of refrigerator to which the door is hinged (i.e. on the "most usual" dimensions of items which can be introduced in the refrigerator), and on the number of shelves which are expected to be mounted in such a door 1.

Moreover, lugs 3 might extend along the whole height of the door 1, or only for a portion of it.

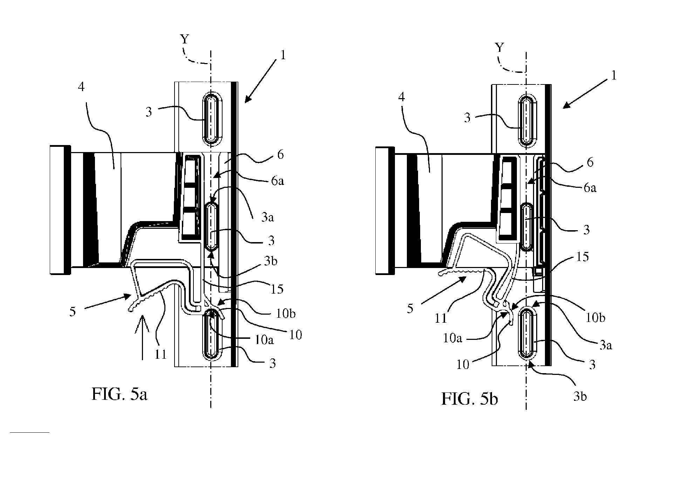

Lugs 3 generally have an oblong shape along the Y axis, i.e. their dimension along the Y axis is longer than their dimension(s) in any other directions. They can therefore be considered as rods aligned along the Y axis with rounded ends 3a,3b (the details of the lug shape are better visible in figs. 5a and 5b). The two opposite ends 3a, 3b of the lug are named upper and lower end, the term upper and lower being defined by the positioning of the refrigerating device 100 in its normal usage. The lower end 3b of a given lug 3 faces the upper end 3a of the lug beneath in the same column.

The door 1 comprises, as mentioned above, at least a height-adjustable support assembly 40 including a storage member 4, such as a shelf.

It is to be understood that shelves are only one example of supporting member that can be used in the appliance of the invention, and different types of supporting members, such as a storage bin, a drawer (both not shown) or other types of shelves can be used as well. The term "storage member" indicates any storage element which is suitable to contain items to be placed in a refrigerator, for example it might indicate a plane shelf, a full width bin, a half width bin, a dairy bin which also includes a cover, etc.

The support assembly 40 is connected to the inner surface 8 of the door 1 by means of the lugs 3 above described, which constitute the supports which the assembly 40 is coupled to.

The refrigerating appliance 100 of the invention may contain any arbitrary number of support assemblies 40 (see for example fig. 1 in which a refrigerating appliance 100 including a plurality of different types of door support assemblies is shown); in the following, only a single support assembly 40 will be described. In addition, the door 1 can also comprise one or more shelves 4pa according to the prior art, i.e. shelves that need to be removed from the door when adjusted in height, as depicted in fig. 1 a. For example, the lowermost shelf 4pa attached to the door 1 can be such a prior art shelf to avoid unwanted removal of the height adjustable support assembly 40 during the sliding, as it will be better clarified below.

According to a preferred embodiment of the invention depicted in the drawings, each support assembly 40 is connected to the door 1 by means of two lugs 3, in detail a lugs pair, however the connection can be made by any number of lugs.

With now reference to figures 2a and 2b, each support assembly 40 includes a storage member 4. In a preferred embodiment of the invention, the storage member 4 comprises a casing 7 including a floor 18, two opposite side walls 9a,9b and a front wall 12. Front 12 and side walls 9a,9b are apt to hold the items in place (i.e. within the storage member) while the door 1 of the refrigerating appliance 100 is opened and closed. A rear wall 21 is possibly included in the casing 7 as well and it is configured in accordance with the shape of the rear wall 14 of the refrigerating appliance 100 so that the rear wall 21 of the storage member 4 can slide without obstacles on the rear wall 14 of the door 1, e.g. the two wall surfaces 14, 21 have a mating shape. The casing 7 can be realized in any of the standard materials that are suitable for usage in refrigerators, such as plastic and/or metal and/or glass.

The support assembly 40, according to an aspect of the invention, also includes coupling means 5 to couple the storage member 4 to the lugs pair 3. The coupling means 5 can be fixed to the storage member 4 in any known way, such as by snap fitting connection, or the coupling means 5 can be co-injected on the casing 7 of the storage member 4. Preferably, according to an embodiment of the invention, the support assembly 40 includes a first and a second coupling means 5, which are preferably located in correspondence of each side wall 9a,9b of the casing 7. The coupling means 5 are movable from a first operative position in which the support assembly 40 can be fixed to the lugs 3, i.e. in which each coupling means 5 is connected to one of the lugs 3 of the lugs pair, to a second operative position in which the coupling means 5 are disengaged from the lugs 3. In the second operative position, the support assembly 40 can, by means of the application of a force along the vertical direction, be slid vertically in order to adjust its height.

The sliding of the storage member 4 on the door 1 is not limited to the configuration in which rear wall 14 of door 1 and rear wall 21 of storage member 4 are in contact, as a gap can be present therebetween. The sliding movement along the vertical direction of the storage member 4 is guided in correspondence of the side walls 13a,13b of the door 1 by a specific connection realized between the coupling means 5 and the lugs 3, which will be detailed below.

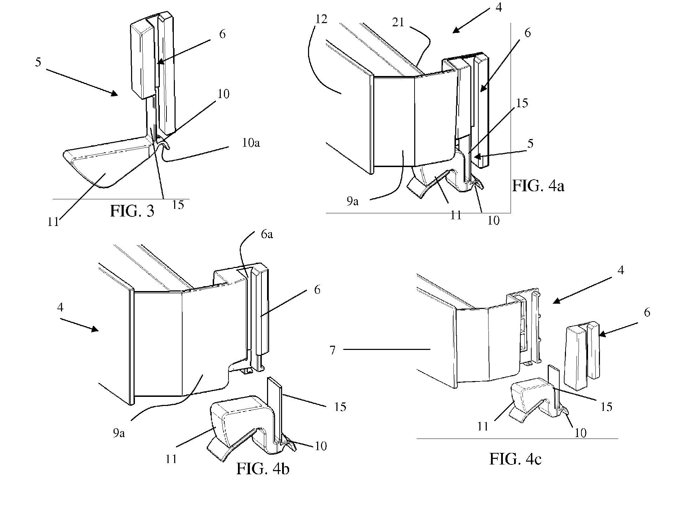

In fig. 3, the coupling means 5 are represented in an enlarged view detached from the casing 7. The coupling means 5 include a hook member 10 for anchoring the assembly 40 to the lugs 3, an actuating portion 11 to move the coupling means 5 from the first to the second operative position and vice versa and a connection element (or portion) 15 connecting the hook member and the actuating portion. The coupling means 5 may also include a guiding portion 6, connected to the connecting element 15, which will be better detailed below.

Basically, in the embodiment of fig. 3, the coupling means 5 are "L-shaped", with the actuating portion 11 extending horizontally, the connection element 15 and the guiding portion 6 extending vertically, and the hook member 10 protruding from the corner of the L opposite the actuating portion 11. Moreover, in this embodiment the connection element 15 is a resilient element. Therefore, the actuating portion 11 and the hook member 10 form together a substantially rigid part, which is connected resiliently, via the resilient element 15, to the guiding portion 6.

Therefore, the resilient element 15 is able to propagate a movement of the actuating portion 11 to the hook member 10 so that the position of the hook 10 can be changed.

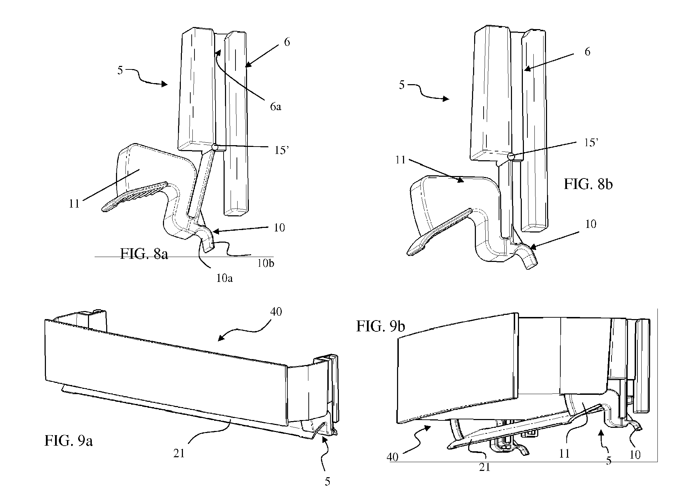

In a different embodiment shown in figs 8a and 8b, the connection element 15 may be a relatively rigid member. In this configuration, the connection element 15 is connected to the guiding portion 6 via a hinge element 15' which allows the movement of the actuating portion 11 and hook member 10 from the first engaged (fig. 8b) to the second disengaged (fig. 8a) position, by rotation of the hook member 10 around the hinge axis of the hinge element 15'. The rotation is caused by applying a thrust on the actuating portion 11. The hinge 15' can be fixed directly to the casing 7 of the storage member 4 or to the guiding portion 6.

In case the connection element 15 is resilient, the coupling means 5 will be called in the following resilient coupling means.

In a preferred embodiment of the invention, hook member 10, actuating portion 11 and connection element 15 are all realized in the same material and are integral, i.e. a single piece. The material in which the coupling means 5 are realized can be for example a plastic material, such as polyoxymethylene (copolymer acetalin resin), polyamide (Nylon), polypropylene or acrylonitrile butadiene styrene.

The actuating portion 11 is the portion which is actuated by the user when he/she desires to change the height of the storage member 4. As it will be described below, it is not necessary to actuate this portion for every type of support assembly's movement. When portion 11 is actuated by the user, the coupling means 5 are moved from the first operative engaged position to the second operative disengaged position, which will be better clarified below. Portion 11 can have any desired shape, as long as it can be easily actuated by a user, i.e. it can be moved manually, typically by a finger. As preferred embodiments, the actuating portion 11 can be a push button or a tab. According to a preferred embodiment of the invention shown in figs. 2a and 2b, two coupling means 5 are connected to both sides of storage member 4 and the two corresponding actuating portions 11 project below the floor 18 of the casing 7. More preferably, two actuating portions 11 are present in correspondence of the two side walls 9a,9b of the casing 7 protruding below the floor 18. In a preferred embodiment of the invention, each actuating portion 11 is apt to be pushed towards the floor 18 of the storage member 4: by the mentioned pushing, the coupling means 5 are moved from the first engaged position with the hook member 10 in abutment on the lug 3 to the second disengaged position in which the hook member 10 is not coupled to the lug 3. With now reference to figs. 5a and 5b the hook member 10 realizes the mechanical coupling between the storage member 4 and the lug(s) 3. When the coupling means 5 are in the first operative position, the hook member 10 abuts on a lug 3 (see fig. 5a in which a coupling means is shown); in particular, in the embodiment including two columns of lugs 3 and two coupling means 5, each of the two hook members 10 abuts on one of the lugs of the lugs pair. The hook member 10 projects below the floor 18 of the casing in correspondence of the side wall 9a,9b and includes a hook surface 10a, in particular a concave surface, which mates a portion of the upper surface of the upper end 3a of the lug 3, i.e. the hook member 10 abuts on the upper rounded end 3a of the lug 3; this configuration is depicted in fig. 5a. Hook member 10 and lug 3 are substantially aligned along the Y axis and the hook member 10 is positioned substantially on top of the lug 3 to which it is connected. In the second operative position, the hook member 10 is not in contact with the lug 3 and this configuration is visible in fig. 5b. Indeed, in the second operative position the hook member 10 is displaced with respect to the Y axis, i.e. it is not aligned any more with the lug 3 and its is shifted sideways.

The resilient element 15 connects the hook member 10 with the actuating portion 11, so that when the actuating portion 11 is pressed, movement of the actuating portion 11 are transferred to the hook member 10 and, when the actuating portion 11 is released, it acts as a spring to bring the hook member back in the first operative position, i.e. it constantly applies a biasing force (i.e. a "snap-in" force) to move the hook member in a position aligned with the lugs 3 along the Y axis. The resilient element 15 can have the shape of a strip of resilient material as in all the shown embodiments (see for example figs. 4a-4c).

In a preferred embodiment in which the assembly 40 includes two coupling means 5 located at the two sides of the casing 7, the two actuating portions 11 can be connected one to the other so that they can be actuated at the same time by a single action, for example using a single hand. In this embodiment, the actuation of one of the two coupling means 5 causes an actuation also of the other ones. With reference to figs. 9a and 9b, the assembly 40 includes a connecting bar 21 connecting the two actuating portions 11, so that the two actuating portions 11 and the connecting bar 21 form a single rigid piece. By a single actuation of the bar 21, i.e. by pushing the same or by pushing one of the two actuating portions 11, the two actuating portions 11 can force simultaneously both hook members 10 to disengage from the lugs 3. In this way, it is possible to move the storage member 4 by using a single hand. In addition, in this embodiment it is not possible to inadvertently block the sliding of one of the sides of the shelf 4, for example losing grip of one of the actuating portions. Without the bar 21, both actuating portions 11 have to be pushed by the user and in case of such asymmetrical blocking, the storage member might tilt transversally and items might fell. The support assembly 40 further includes a guiding portion 6 to guide the storage member 4 in its vertical movements. In particular, the guiding portion 6 is slidely coupled with the column of lugs 3, as better explained in the following. The guiding portion 6 can be an integral part of the coupling means 5, as shown in figs. 3 and 4a, it can be realized integrally with the casing 7 in correspondence of the side walls 9a,9b of the same, as depicted in fig. 4b, or it can be an additional element mounted on the storage member 4 as shown in fig. 4c. In any case, the location of the guiding portion 6 is in correspondence to the location of the lug 3; in a preferred embodiment the guiding portion 6 is positioned on both side walls 9a,9b of the casing 7 so as to face the lugs 3. More in detail, the guiding portion 6 is, in cross-section, substantially U-shaped, so as to define a vertical seat 6a, such as a vertical groove, extending along the Y axis and having a width which is substantially the same as the width of the lugs 3 in order to contain the same, while its vertical length is such that it contains preferably at least a lug 3 in its entirety and moreover it preferably is longer than the spacing between two consecutive lugs 3 in a single column. When the storage member 4 is mounted on the door 1, the guiding portion 6 has the function of a runner and the column of lugs 3 has the function of a rail on which the runner slides: due to the fact that the length of the guiding portion 6 is preferably longer than the spacing between two consecutive lugs 3, the discontinuities of the column of lugs 3 are not "perceived" by the guiding portion for which the column is substantially a continuous rail. In the embodiment of the invention including two columns of lugs 3 realized in the two side walls 13a,13b of the door 1, the guiding portion 6 located in correspondence of the first (second) side wall 9a (9b) of the storage member 4 is engaged with the column of lugs 3 realized on the first (second) side wall 13a (13b) of the door 1 forming a form fitting coupling. In the vertical movements of the storage member 4, the guiding portions 6 therefore slide on the lugs columns. As said, the guiding portions 6 are so dimensioned that the risk of an accidental going off the rail(s) of the storage member 4 is minimized.

Preferably, the guiding portion 6 is realized in a plastic material having a low friction coefficient so that the sliding of the storage member 4 on lugs 3 is easy and smooth. Suitable materials for the guiding portion construction are for example resins in which elements that reduce frictions are added, Nylon or polyoxymetylene.

In accordance to the invention, in order to couple a support assembly 40 to the door 1, the following procedure is performed. In the following, the embodiment including two columns of lugs 3 located in the two side walls 13a,13b will be described, however the procedure can be easily modified to adapt the same to the different support assemblies of the invention. The support assembly 40 is placed between the side walls 13a,13b of the refrigerator door 1 at one end of the lugs columns. More in particular, the support assembly can be coupled to the door 1 from the lowermost end of the column or from the topmost end of the column. The example below describes the coupling from above (topmost end). Preferably the rear wall 21 of the casing 7 is also in contact with the rear wall 8 of the door surface 14.

The topmost lug 3 of the column on each side wall 13a,13b is coupled with the corresponding guiding element 6 positioned in the corresponding side wall 9a, 9b of the support assembly 40. To do that, the coupling means 5 are put in the second operative position by pushing the actuating portions 11 toward the floor 18 of casing 7, so that the hook portions 10 move away from the Y axis and do not impede the sliding of the guiding portions 6 on the lugs 3.

The support assembly 40 can therefore be slid vertically till the desired height, e.g. till the lugs pair located at the desired height along the Y axis is reached. When the desired position is reached, the actuating portions 11 are released so that the resilient elements 15 can push back the hook members 10 to the position along the Y axis, thus moving the coupling means 5 to the first operative position where the support assembly 40 can be fixed to the lugs 3. The height of the storage member 4 is then further finely adjusted so that the hook members 10 abut on the selected lugs 3 and thus engage with the selected lugs pair 3. The gravity force and the mating shape between the inner surface 10a of the hook members 10 and the outer upper surface 3a of the lugs 3 assure the stability of the configuration.

The support assembly 40 can be also coupled in a similar way to the two lugs column via the lowermost lugs pair, i.e. the storage member 4 can be coupled to the lugs 3 from below.

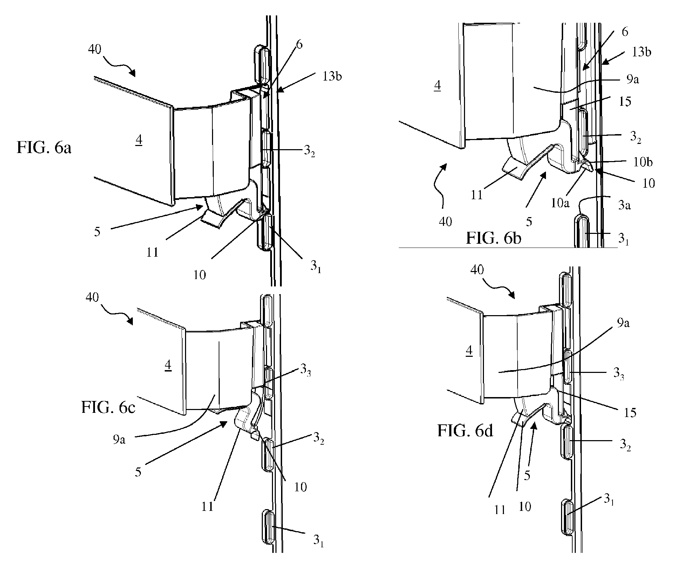

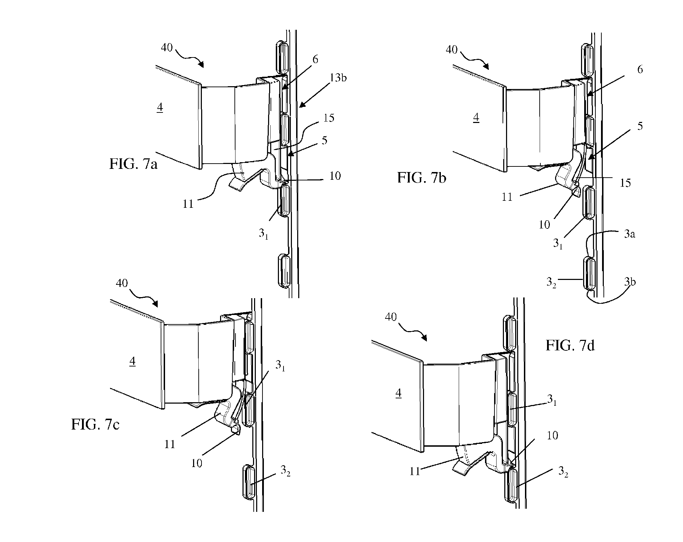

Additional movements of the support assembly 40 in the two vertical directions, i.e. upwardly and downwardly, are now described with reference to figs. 6a-6d and 7a-7d, respectively.

With reference to figs. 6a-6d, in fig 6a the storage member 4 is initially fixed on a lug pair 3 and the coupling means 5 are in the first operative position, in which the hook members 10 are in abutment with the lugs 3 upper end surfaces 3a. The lugs pair to which the storage member 4 is initially connected is called in the following 3₁. Should it be desired to move or adjust the storage member vertically upwardly, the storage member 4 can be pushed manually in an upward direction without operating the actuating portion 11. Indeed, by raising the storage member 4, the hook members 10 automatically disengages from the lugs pair 3₁ although they are still in the first operative position. As soon as the space between the lugs pair 3₁ to which the storage member 4 was previously connected and the lugs pair 3₂ directly above has been covered by the vertical movement, the hook members 10 abut against the above located lugs pair 3₂. However, this abutment is realized between the convex upper surface 10b of the hook members 10 and the concave lower surface 3b of the lower end of the lugs 3, therefore no mating between the respective surfaces is possible and no coupling of the storage member 4 to the lugs 3. In order to proceed with the translational movement, the hook members 10 have to be moved to the second operative position, for example operating manually the actuating portions 11 (e.g. pushing the same), so that the hook members 10 are moved to a position in which they do not hinder the movement of the lugs 3 inside the guiding portions 6 (see fig. 6b).

In the embodiment in which the coupling means 5 include the resilient element 15, the operation of the actuating portions 11 by the user is not necessary: the force applied to the storage member 4 by the user in order to move it upwards generates as a counteraction a force applied to the hook members 10 by the lugs downwardly and the resilient elements 15 are bended in the same way as if the actuating portions 11 had been pushed (see fig. 6b). By bending the resilient elements 15, the hook members 10 are thus forced to move to the second operative position. The sliding of the lugs 3 inside the guiding elements 6 can thus continue ― the hook member is not hindering the movement any more - and in detail the hook members 10 in the second operative position glide with their outer surface 10b on the lateral surfaces of the lugs till the end of the same, i.e. till the spacing between the upper lugs pair 3₂ and the even upper lugs pair 3₃ is reached (see fig. 6c),. In this position, due to the biasing force exerted by the resilient elements 15, the hook members 10 are pushed back to the first operative position along the Y axis.

At this stage, the storage member 4 can be finely adjusted by lowering slightly the storage member itself so that the hook members 10 abut on the upper surface of the upper lugs pair 3₂. In fig. 6d, the engagement between the hook member 10 and the upper lug 3₂ is shown. Obviously, the user can simply continue the described process, i.e. the user can simply continue to apply a force to move the storage member upwards and the hook members 10 again are forced to move to the second operative position by the upper lugs pair, etc repeating all the steps depicted on figs. 6a-6d till the desired height is reached.

With now reference to the embodiment of figs. 8a,8b, during the upwards movement of the support assembly 40, the coupling means 5 also moves automatically ― i.e. without operations by the user - from the first to the second operative position when the upper surface of the hook member 10 abuts on the surface of the lower end 3b of the lug 3₂: the abutment causes a rotation of the hook 10 around the hinge 15' axis. By further moving upwards the support assembly 40, the hook member 10 slides against the lateral surface of the lug 3₂, until it overpasses the upper end 3a of the lug 3₂. Then, the coupling means 5 move back, subjected to gravity and by rotating around the hinge axis of the hinge element 15', to the first operative position, with the hook member 10 positioned again along the Y axis.

The downward movement of the support assembly 40 is shown with reference to figs. 7a-7d. In fig. 7a, the support assembly 40 is positioned in correspondence to a given lugs pair 3₁. As already explained, when the support assembly 40 is fixed in a given position, the coupling means 5, e.g. the hook members 10, are in the first operative position. To shift the support assembly downwards, the simple application of a force by the user downwards is not sufficient to move the hook members 10 into the second operative position even in presence of the resilient element 15. Therefore, in order to allow downward movement of the support assembly 40, the storage member 4 has to be lifted and then the actuating portions 11 have to be pushed by the user (see the configuration of fig. 7b). The initial lift is needed in order to disengage the hook members 10 from the lugs 3₁ and obtain a sufficient room for the hook members 10 to move sideways to the second operative position without being blocked in this movement by the lugs 3₁ themselves. Then the mentioned actuation of the actuating portions 11 moves the hook members 10 in the second operative position. When the hook members 10 are in the second operative position, the sliding of the support assembly 40 can be performed in the manner already explained till the desired height is reached, as shown in fig 7c where the vertical translation of one lugs pair downwards has been performed, from 3₁ to 3₂. If the actuating members 11 are kept pushed, so that the hook members 10 are kept aside with respect to the Y axis, the sliding of the support assembly 40 can continue and any desired height can be reached. When the actuating members 11 are released, the hook members 10 return to the first operative position thanks to the connection elements 15. In particular, if the connection elements 15 are resilient, the hook members 10 return to the first operative position thanks to the resilient action of the elements 15; differently, if the connection elements 15 are rigid and provided with hinges 15' as in the example of figs. 8a and 8b, the hook members 10 return to the first operative by gravity or, possibly, by a pulling action of the user on the actuating members 11. The storage member 4 is thus then moved slightly downwardly till the hook members 10 abut on the upper ends of the lugs 3₂ (see fig. 7d).

In the described downwards and upwards movements, the vertical length of the guide portions 6, which is preferably longer than the distance between two consecutive lugs pairs, minimizes the risk of falling off of the support assembly, e.g. a disengagement of the guide portions from the lugs columns is substantially avoided.

## Claims

1. A refrigerating appliance (100) including:
- a door (1) defining an inner surface (8) on which at least a plurality of support members (3) disposed one on top of the other along a vertical axis (Y) are located;
- a height-adjustable support assembly (40) mounted on said door (1), said support assembly (40) comprising coupling means (5) to couple the support assembly (40) to at least one of said support members (3),
**characterized in that** said coupling means (5) are movable from a first position, where they can be coupled to said at least one support member (3) for securing the position of the support assembly (40) on the door, to a second position, where they are disengaged from said at least one support member (3) to allow adjusting the height of the support assembly (40), and **in that** said support assembly (40) also includes a guiding portion (6) configured to be slidely coupled with said support members (3) to guide the support assembly (40) in movements along the vertical direction.

2. The refrigerating appliance (100) according to claim 1, wherein said coupling means (5) comprise a hook member (10) which, in said first position, is in abutment with a surface (3a) of said at least one support member (3).

3. The refrigerating appliance (100) according to claim 2, wherein, in said first position, the hook member (10) is in abutment with an upper surface (3a) of said at least one support member (3) and hinders the sliding of the support assembly (40).

4. The refrigerating appliance (100) according to any of the preceding claims, wherein the coupling means (5) comprise a resilient element (15) connected to the hook member (10) to bias the hook member (10) towards said first position.

5. The refrigerating appliance (100) according to any of the preceding claims, wherein the coupling means (5) comprise a hinge (15') connected to the hook member (10) to rotate the hook member (10) from and to said first position.

6. The refrigerating appliance (100) according to any of the preceding claims, wherein the coupling means (5) include an actuating portion (11) connected to the hook member (10) and manually operable by a user to move the hook member (10) from said first to said second position.

7. The refrigerating appliance (100) according to any of the preceding claims, wherein the coupling means (5) and the guiding portion (6) are integral to each other.

8. The refrigerating appliance (100) according to any of the preceding claims, wherein the guiding portion (6) is realized in a plastic material having a low friction coefficient.

9. The refrigerating appliance (100) according to any of the preceding claims, wherein the inner surface (8) of the door (1) includes a first and a second plurality of support members (3) respectively aligned along vertical axes (Y), and wherein the support assembly (40) includes first and second coupling means (5), each coupling means in said first position being connected to a support member (3) of said first or of said second plurality.

10. The refrigerating appliance (100) according to claim 9, wherein the support assembly (40) includes a connecting element (21) to connect the first and the second coupling means (5) so that a movement of any of said first or second coupling means from said first to said second position, or vice versa, causes the movement of the other of said first or second coupling means from said first to said second position, or vice versa.

11. The refrigerating appliance (100) according to claim 9 or 10, wherein the support assembly (40) includes a casing (7) having first and second side walls (9a,9b), said first and second coupling means (5) being located in correspondence to said first and second side walls (9a,9b) of said support assembly (40).

12. The refrigerating appliance (100) according to anyone of claims 9 to 11, wherein the support assembly (40) includes first and second guiding portions (6), the first guiding portion (6) being located in correspondence of said first side wall (9a) of said support assembly (40) and embracing at least a portion of a support member (3) of said first plurality and said second guiding portion (6) being located in correspondence of said second side wall (9b) of said support assembly (40) and embracing at least a portion of a support member (3) of said second plurality, so that said support assembly can slide on said door, said first and second plurality of support members (3) acting as rails.

13. The refrigerating appliance (100) according to anyone of the preceding claims, wherein the support members (3) comprise lugs.
